# EUROPEAN PATENT APPLICATION

(11) **EP 4 697 781 A1**
(43) Date of publication of application: **18.02.2026**
(21) Application number: 25194295.9
(22) Date of filing: 06.08.2025
(51) Int. Cl.: H04W 24/02, H04W 84/12, H04W 24/04, H04L 41/147, H04L 41/16

(54) **CONTROL AND MODEL TRAINING FOR WIRELESS NETWORK**

(30) Priority: 14.08.2024 US 202418805483
(71) Applicant: TP-Link Systems Inc., Irvine, California 92618 (US)
(72) Inventor: ZHENG, Kaiwen, Shenzhen, 518000 (CN)
(74) Representative: Marks & Clerk LLP

(57) **Abstract**

This disclosure provides a control apparatus, a model training apparatus, and a control method and a model training method for an access point (AP) connected with a client device. The control method includes: obtaining communication condition data of the client device at a given time; and predicting a traffic probability pattern of the client device at the given time by using the communication condition data, time information related to the given time and a prediction model.

## Description

### CROSS REFERENCES TO RELATED APPLICATIONS

The present application claims the priority of the US patent application No. 18/805,483 filed on August 14, 2024, for all purposes, the disclosure of which is incorporated herein by reference in its entirety as part of the present application.

### TECHNICAL FIELD

The present disclosure relates to wireless network technology, and more specifically, to a control apparatus, a model training apparatus, a control method and a model training method for a wireless network.

### BACKGROUND

With the development of communication technology, wireless local area network (WLAN) technology based on IEEE 802.11 standard has been widely used.

In the management of WLAN network, it is important to make traffic prediction. By predicting a traffic trend in the WLAN network, network resources can be planned, such as timely upgrading the bandwidth, adjusting wireless channels, etc. Further, potential network problems may be found early, for example, unusual traffic peaks may be signs of network attacks, and timely intervention can reduce the risk of service interruption.

### SUMMARY

The present disclosure provides techniques for control and model training related to traffic prediction for a wireless network.

According to an aspect of the present disclosure, there is provided a control apparatus, comprising: one or more processors; and one or more memories, in which program instructions are stored, wherein the program instructions, when performed by the one or more processors, perform a control method for an access point (AP) connected with a client device, comprising: obtaining communication condition data of the client device at a given time; and predicting a traffic probability pattern of the client device at the given time by using the communication condition data, time information related to the given time and a prediction model.

In at least one embodiment, the communication condition data comprise one or more of the followings:
a Received Signal Strength Indication (RSSI) feature of the AP from the client device,
a negotiation rate feature of the AP with the client device,
a topology structure type of the wireless local area network (WLAN) where the AP and the client device are located,
a network application type of the WLAN where the AP and the client device are located,
a network load of the WLAN where the AP and the client device are located, or
a traffic usage behavior of the client device.

In at least one embodiment, the RSSI feature is represented by a first code subjected to non-uniform quantization and variable length coding on a RSSI of the AP from the client device, and/or the negotiation rate feature is represented by a second code subjected to non-uniform quantization and variable length coding on a negotiation rate of the AP with the client device.

In at least one embodiment, the traffic probability pattern of the client device includes a probability distribution of traffic amounts of the client device.

In at least one embodiment, the predicted probability distribution of the traffic amounts is one of multiple pre-defined probability distributions.

In at least one embodiment, the program instructions, when performed by the one or more processors, further perform:
determining a predicted traffic amount of the client device at the given time based on the predicted probability distribution of the traffic amounts of the client device at the given time; and
performing one or more of the following actions:
   switching a connection between the client device and the AP to a connection between the client device and another AP in response to the predicted traffic amount being lower than a first threshold;
   maintaining the connection between the client device and the AP in response to the predicted traffic amount being higher than a second threshold;
   reducing power or bandwidth of the AP in response to the predicted traffic amount being lower than a third threshold; or
   increasing the power or bandwidth of the AP in response to the predicted traffic amount being higher than a fourth threshold.

In at least one embodiment, the prediction model is trained by steps of:
obtaining training communication condition data of a training client device at training time points or in training time periods;
obtaining training probability distributions of traffic amounts of the training client device at the training time points or in the training time periods based on training traffic data of the training client device at the training time points or in the training time periods; and
training the prediction model based on the training probability distributions together with the training communication condition data and time data related to the training time points or the training time periods.

In at least one embodiment, the obtaining training probability distributions of traffic amounts of the training client device at the training time points or in the training time periods based on training traffic data of the training client device at the training time points or in the training time periods comprises:
processing the training traffic data by removing the burst traffic data from the training traffic data, and/or processing the training traffic data by smooth-filtering the training traffic data; and
obtaining training probability distributions of traffic amounts based on the processed training traffic data.

In at least one embodiment, the obtaining training probability distributions of traffic amounts of the training client device at the training time points based on training traffic data of the training client device at the training time points comprises:
determining one or more training time intervals each comprising successive training time points among the training time points based on characteristics of the training communication condition data and/or the training traffic data of the training time points; and
determining a training probability distribution of traffic amounts for training time points in each of the one or more training time intervals based on training traffic data in the corresponding training time interval, wherein the training probability distribution is a predefined probability distribution.

In at least one embodiment, the traffic probability pattern of the client device includes a probability of occurrence of burst traffic of the client device.

In at least one embodiment, the program instructions, when performed by the one or more processors, further perform:
determining actual traffic at the given time is abnormal in response to that an actual probability of occurrence of burst traffic at the given time is larger than the predicted probability of burst traffic at the given time.

In at least one embodiment, the program instructions, when performed by the one or more processors, further perform one or more of the following actions:
checking network security of the AP;
repairing network security of the AP;
starting a network firewall of the AP;
restarting the AP; or
increasing power or bandwidth of the AP.

In at least one embodiment, the prediction model is trained by steps of:
determining occurrences of burst traffic based on training traffic data of the training client device at training time points or in training time periods;
obtaining training communication condition data of a training client device at the training time points or in the training time periods;
obtaining training probabilities indicating occurrences of burst traffic of the training client device at the training time points or in the training time periods based on training traffic data of the training client device at the training time points or in the training time periods; and
training the prediction model based on the training probabilities together with the training communication condition data and time data.

In at least one embodiment, the obtaining training probabilities indicating occurrences of burst traffic of the training client device at the training time points or in the training time periods based on training traffic data of the training client device at the training time points or in the training time periods comprises:
processing the training traffic data by extracting burst traffic from the training traffic data; and
obtaining the training probabilities indicating occurrences of burst traffic based on the processed training traffic data.

According to another aspect of the present disclosure, there is provided a model training apparatus, comprising
one or more processors; and
one or more memories, in which program instructions are stored,
wherein the program instructions, when performed by the one or more processors, perform a model training method for an access point (AP) connected with a client device, comprising: obtaining training communication condition data of a training client device at training time points or in training time periods;
obtaining training traffic probability patterns of the training client device at the training time points or in the training time periods based on training traffic data of the training client device at the training time points or in the training time periods; and
training a prediction model based on the traffic probability patterns together with the training communication condition data and time data related to the training time points or the training time periods.

In at least one embodiment, the training traffic probability patterns include training probability distributions of traffic amounts of the training client device,
wherein the program instructions, when performed by the one or more processors, perform the obtaining training traffic probability patterns of the training client device at the training time points or in the training time periods based on training traffic data of the training client device at the training time points or in the training time periods by:
obtaining the training probability distributions of traffic amounts of the training client device at the training time points or in the training time periods based on training traffic data of the training client device at the training time points or in the training time periods; and
wherein the program instructions, when performed by the one or more processors, perform the training a prediction model based on the traffic probability patterns together with the training communication condition data and time data related to the training time points or the training time periods by:
   training the prediction model based on the training probability distributions together with the training communication condition data and time data related to the training time points or the training time periods.

In at least one embodiment, wherein the program instructions, when performed by the one or more processors, perform the obtaining training probability distributions of traffic amounts of the training client device at the training time points or in the training time periods based on training traffic data of the training client device at the training time points or in the training time periods by:
processing the training traffic data by removing the burst traffic data from the training traffic data, and/or processing the training traffic data by smooth-filtering the training traffic data; and
obtaining training probability distributions of traffic amounts based on the processed training traffic data.

In at least one embodiment, the program instructions, when performed by the one or more processors, perform the obtaining training probability distributions of traffic amounts of the training client device at the training time points based on training traffic data of the training client device at the training time points by:
determining one or more training time intervals each comprising successive training time points among the training time points based on characteristics of the training communication condition data and/or the training traffic data of the training time points; and
determining a training probability distribution of traffic amounts for training time points in each of the one or more training time intervals based on training traffic data in the corresponding training time interval, wherein the training probability distribution is a predefined probability distribution.

In at least one embodiment, the training traffic probability patterns include training probabilities of occurrences of burst traffic of the training client device,
wherein the program instructions, when performed by the one or more processors, perform the obtaining training traffic probability patterns of the training client device at the training time points or in the training time periods based on training traffic data of the training client device at the training time points or in the training time periods by:
obtaining training probabilities indicating occurrences of burst traffic of the training client device at the training time points or in the training time periods based on training traffic data of the training client device at the training time points or in the training time periods; and
wherein the program instructions, when performed by the one or more processors, perform the training a prediction model based on the traffic probability patterns together with the training communication condition data and time data related to the training time points or the training time periods by:
   training the prediction model based on the training probabilities together with the training communication condition data and time data related to the training time points or the training time periods.

According to another aspect of the present disclosure, there is provided a control method for an access point (AP) connected with a client device, comprising: obtaining communication condition data of the client device at a given time; and predicting a traffic probability pattern of the client device at the given time by using the communication condition data, time information related to the given time and a prediction model.

In at least one embodiment, the communication condition data comprise one or more of the followings:
a Received Signal Strength Indication (RSSI) feature of the AP from the client device,
a negotiation rate feature of the AP with the client device,
a topology structure type of the wireless local area network (WLAN) where the AP and the client device are located,
a network application type of the WLAN where the AP and the client device are located,
a network load of the WLAN where the AP and the client device are located, or
a traffic usage behavior of the client device.

In at least one embodiment, the RSSI feature is represented by a first code subjected to non-uniform quantization and variable length coding on a RSSI of the AP from the client device, and/or the negotiation rate feature is represented by a second code subjected to non-uniform quantization and variable length coding on a negotiation rate of the AP with the client device.

In at least one embodiment, the traffic probability pattern of the client device includes a probability distribution of traffic amounts of the client device.

In at least one embodiment, the predicted probability distribution of the traffic amounts is one of multiple pre-defined probability distributions.

In at least one embodiment, the method further comprises:
determining a predicted traffic amount of the client device at the given time based on the predicted probability distribution of the traffic amounts of the client device at the given time; and
performing one or more of the following actions:
   switching a connection between the client device and the AP to a connection between the client device and another AP in response to the predicted traffic amount being lower than a first threshold;
   maintaining the connection between the client device and the AP in response to the predicted traffic amount being higher than a second threshold;
   reducing power or bandwidth of the AP in response to the predicted traffic amount being lower than a third threshold; or
   increasing the power or bandwidth of the AP in response to the predicted traffic amount being higher than a fourth threshold.

In at least one embodiment, the prediction model is trained by steps of:
obtaining training communication condition data of a training client device at training time points or in training time periods;
obtaining training probability distributions of traffic amounts of the training client device at the training time points or in the training time periods based on training traffic data of the training client device at the training time points or in the training time periods; and
training the prediction model based on the training probability distributions together with the training communication condition data and time data related to the training time points or the training time periods.

In at least one embodiment, the obtaining training probability distributions of traffic amounts of the training client device at the training time points or in the training time periods based on training traffic data of the training client device at the training time points or in the training time periods comprises:
processing the training traffic data by removing the burst traffic data from the training traffic data, and/or processing the training traffic data by smooth-filtering the training traffic data; and
obtaining training probability distributions of traffic amounts based on the processed training traffic data.

In at least one embodiment, the obtaining training probability distributions of traffic amounts of the training client device at the training time points based on training traffic data of the training client device at the training time points comprises:
determining one or more training time intervals each comprising successive training time points among the training time points based on characteristics of the training communication condition data and/or the training traffic data of the training time points; and
determining a training probability distribution of traffic amounts for training time points in each of the one or more training time intervals based on training traffic data in the corresponding training time interval, wherein the training probability distribution is a predefined probability distribution.

In at least one embodiment, the traffic probability pattern of the client device includes a probability of occurrence of burst traffic of the client device.

In at least one embodiment, the method further comprises:
determining actual traffic at the given time is abnormal in response to that an actual probability of occurrence of burst traffic at the given time is larger than the predicted probability of burst traffic at the given time.

In at least one embodiment, the method further comprises performing one or more of the following actions:
checking network security of the AP;
repairing network security of the AP;
starting a network firewall of the AP;
restarting the AP; or
increasing power or bandwidth of the AP.

In at least one embodiment, the prediction model is trained by steps of:
determining occurrences of burst traffic based on training traffic data of the training client device at training time points or in training time periods;
obtaining training communication condition data of a training client device at the training time points or in the training time periods;
obtaining training probabilities indicating occurrences of burst traffic of the training client device at the training time points or in the training time periods based on training traffic data of the training client device at the training time points or in the training time periods; and
training the prediction model based on the training probabilities together with the training communication condition data and time data.

In at least one embodiment, the obtaining training probabilities indicating occurrences of burst traffic of the training client device at the training time points or in the training time periods based on training traffic data of the training client device at the training time points or in the training time periods comprises:
processing the training traffic data by extracting burst traffic from the training traffic data; and
obtaining the training probabilities indicating occurrences of burst traffic based on the processed training traffic data.

According to yet another aspect of the present disclosure, there is provided a model training method for an access point (AP) connected with a client device, comprising obtaining training communication condition data of a training client device at training time points or in training time periods;
obtaining training traffic probability patterns of the training client device at the training time points or in the training time periods based on training traffic data of the training client device at the training time points or in the training time periods; and
training a prediction model based on the traffic probability patterns together with the training communication condition data and time data related to the training time points or the training time periods.

In at least one embodiment, the training traffic probability patterns include training probability distributions of traffic amounts of the training client device,
wherein the program instructions, when performed by the one or more processors, perform the obtaining training traffic probability patterns of the training client device at the training time points or in the training time periods based on training traffic data of the training client device at the training time points or in the training time periods by:
obtaining the training probability distributions of traffic amounts of the training client device at the training time points or in the training time periods based on training traffic data of the training client device at the training time points or in the training time periods; and
wherein the program instructions, when performed by the one or more processors, perform the training a prediction model based on the traffic probability patterns together with the training communication condition data and time data related to the training time points or the training time periods by:
   training the prediction model based on the training probability distributions together with the training communication condition data and time data related to the training time points or the training time periods.

In at least one embodiment, the obtaining training probability distributions of traffic amounts of the training client device at the training time points or in the training time periods based on training traffic data of the training client device at the training time points or in the training time periods comprises:
processing the training traffic data by removing the burst traffic data from the training traffic data, and/or processing the training traffic data by smooth-filtering the training traffic data; and
obtaining training probability distributions of traffic amounts based on the processed training traffic data.

In at least one embodiment, the obtaining training probability distributions of traffic amounts of the training client device at the training time points based on training traffic data of the training client device at the training time points comprises:
determining one or more training time intervals each comprising successive training time points among the training time points based on characteristics of the training communication condition data and/or the training traffic data of the training time points; and
determining a training probability distribution of traffic amounts for training time points in each of the one or more training time intervals based on training traffic data in the corresponding training time interval, wherein the training probability distribution is a predefined probability distribution.

In at least one embodiment, the training traffic probability patterns include training probabilities of occurrences of burst traffic of the training client device,
wherein the obtaining training traffic probability patterns of the training client device at the training time points or in the training time periods based on training traffic data of the training client device at the training time points or in the training time periods comprises:
obtaining training probabilities indicating occurrences of burst traffic of the training client device at the training time points or in the training time periods based on training traffic data of the training client device at the training time points or in the training time periods; and
wherein the training a prediction model based on the traffic probability patterns together with the training communication condition data and time data related to the training time points or the training time periods comprises:
   training the prediction model based on the training probabilities together with the training communication condition data and time data related to the training time points or the training time periods.

According to yet another aspect of the present disclosure, there is provided a non-transitory computer-readable medium on which program instructions are stored, wherein the program instructions, when executed by a processor, cause the processor to perform at least a method according to at least one embodiment of the present disclosure.

According to yet another aspect of the present disclosure, there is provided a computer program product comprising program instructions, wherein the program instructions, when executed by a processor, cause the processor to perform at least a method according to at least one embodiment of the present disclosure.

According to at least one embodiment of the present disclosure, by considering communication condition data which may influence the traffic amount, it is possible to at least make more accurate traffic prediction.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.
Fig. 1 shows an exemplary architecture for a scenario in which a client device roams in a wireless communication environment according to at least one embodiment of the present disclosure;
Fig. 2 shows a flowchart of a control method for an access point (AP) connected with a client device according to at least one embodiment of the present disclosure;
Fig. 3A shows a diagram of an example of a training traffic distribution according to at least one embodiment of the present disclosure;
Fig. 3B shows an example of occurrences of training burst traffic during a period of time according to at least one embodiment of the disclosure;
Fig. 4 shows a flowchart of a model training method based on traffic prediction for an AP connected with a client device according to at least one embodiment of the present disclosure;
Fig. 5 shows an exemplary block diagram illustrating a control apparatus according to at least one embodiment of the present disclosure; and
Fig. 6 shows an exemplary block diagram illustrating a model training apparatus according to at least one embodiment of the present disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that terms such as "first", "second" and "third" are only for descriptive purposes, whereas cannot be understood as indicating or implying relative importance. Likewise, words like "a", "an" or "the" do not represent a quantity limit, but represent an existence of at least one. Words like "include" or "comprise" mean that an element or an object in front of said word encompasses those ones listed following the said word and their equivalents, without excluding other elements or objects. Words like "connect" or "link" are not limited to physical or mechanical connections, but may include electrical connections, whether direct or indirect.

In addition, technical features involved in different embodiments of the present disclosure described below may be combined with each other as long as no conflicts occur therebetween.

In the wireless local area network (WLAN) network, a client device (which is interchangeably referred to as e.g., a station (STA), a wireless client, a user, a user device, or non-AP) can move around in coverages of multiple APs in the WLAN and keep its service uninterrupted. When the client device connecting with an original AP moves in the WLAN network, it continues to look for other APs and listen for signals from other APs. When the client device is covered by coverages of two or more APs, the client device's connection with an original AP may be switched to a connection of another AP of the two or more APs. This may be called "roaming".

Once a user uses a client device to connect to the external Internet through an AP, and launches some application programs on the client device, data will be communicated between the client device and the AP, which may also be called traffic. A traffic amount may be defined as a total number of communicated packets.

In order to make a client device move around within the coverage area of WLAN including a plurality of APs without interrupting the service, it is needed to try to guarantee that the switching does not influence users' experience.

In addition, if abnormal traffic is found through traffic prediction, corresponding actions can be made for the abnormal traffic, for example, the working mode of the AP can be adjusted according to the characteristics of abnormal traffic, or network fluctuation or network attack can be identified and dealt with.

Predicting traffic between the client device and the AP is a way to solve the above problems.

However, conventional ways of predicting the traffic are of low accuracy due to the lack of consideration of network topology, business model or other communication conditions of the communication environment. Analysis of comprehensive factors affecting the traffic is lacked. Inaccurate traffic prediction may cause poor roaming or other improper controlling actions, resulting in poor user experience. In addition, conventional machine learning methods for traffic prediction involve high computation complexity.

In view of one or more of the above problems, the present disclosure provides a control method, a model training method, a control apparatus, a model training apparatus, a non-transitory computer readable medium and a computer program product related to traffic prediction, which can more accurately predict traffic of a client device so as to more reasonably adjust network bandwidth and traffic distribution, ensure the stability of roaming network and/or improve user experience. And, some embodiments of the present disclosure can train more accurate prediction models. Further, some embodiments of the present disclosure may reduce computation complexity for training the prediction model.

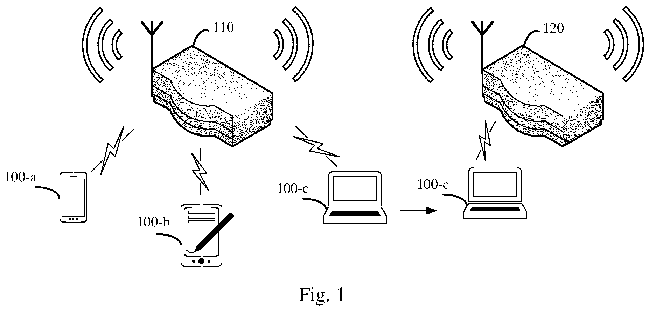

Fig. 1 shows an exemplary architecture for a scenario in which a client device roams in a wireless communication environment according to at least one embodiment of the present disclosure.

An illustrative communication system includes three client devices 100-a, 100-b, and 100-c and two APs 110 and 120, which can be employed in an 802.11 network. The AP 110 or the AP 120 is capable of establishing WLAN communication with the client devices 100-a, 100-b, and 100-c, enabling them of connecting to an external network. This permits the client devices 100-a, 100-b, and 100-c to access a variety of communication services from the internet, including voice, video, packet data, messaging, and broadcast services, among others, through the AP 110 or the AP 120.

The architecture presented in Fig. 1 is purely illustrative and does not impose any limitations on any embodiment of this disclosure. Multiple APs in the network can serve specific sets of client devices, and depending on the application requirements and overall network constraints, the number of client devices in each serving set may be greater or less than the three client devices depicted.

When the client device 110-c enters into coverages of both of its original AP 110 and the AP 120, the client device 110-c may try to disconnect from the AP 110 and connect to the AP 120.

In the scenario of Fig. 1, if the traffic amount of the client device 110-c is high, especially when the user's service on the client device 110-c is actually consuming a large amount of traffic, for example, when the user is watching a live streaming video, the disconnection of the client device 110-c from the AP 110 may cause the live streaming video to be paused. In view of the above considerations, it is better to switch the connection when the traffic amount is low, and maintain the connection when the traffic amount is high.

Thus, accurately predicting the traffic of the client device is preferred for performing a smooth roaming without interrupting the user's service, so as to maintain the stability of the wireless network, ensuring the user's experience.

In some circumstances, due to network fluctuation or network attack, the traffic of the client device may fluctuate significantly, which may cause instability of the wireless network. Thus, accurately predicting the traffic of the client device is also preferred for finding abnormal traffic to identify network fluctuation or network attack, so as to solve the cause of the abnormal traffic.

Although several scenarios requiring traffic prediction are described as above, the disclosure is not limited to them. The embodiments of the present disclosure can be applied to any scenarios which require traffic prediction.

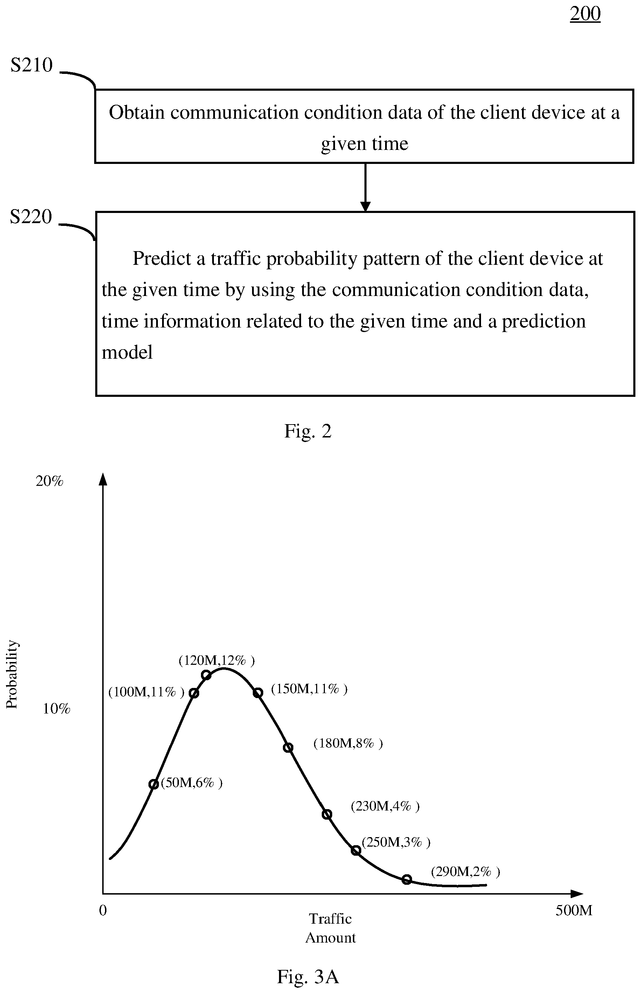

With reference now to Fig. 2, Fig. 2 shows a flowchart of a control method 200 for an AP connected with a client device according to at least one embodiment of the present disclosure. The control method 200 involves traffic prediction and may further involve control actions based on the traffic prediction.

The control method 200 may include steps S210 and S220. To be noted that the control method 200 may be performed by an AP or a control apparatus in the AP or a control apparatus outside of the AP. The AP or the control apparatus can perform the control method including traffic prediction for each of the client devices connected with the AP, and then control the roaming and other actions on the client devices or the AP based on the prediction result.

At step S210, communication condition data of the client device at a given time can be obtained. The communication condition data may refer to any data representing communication conditions in a communication environment of the client device. The communication condition data may influence the traffic of the client device significantly. Thus, the communication condition data can be used to predict the traffic of a client device in a particular communication condition described by the communication condition data.

In some embodiments, the communication condition data may include one or more of the followings: a RSSI feature of the AP from the client device, a negotiation rate feature of the AP with the client device, a topology structure type of the WLAN where the AP and the client device are located, a network application type of the WLAN where the AP and the client device are located, a network load of the WLAN where the AP and the client device are located, a traffic usage behavior of the client device, or else.

An RSSI of the AP from the client device indicates a signal strength of a signal received at the AP from the client device. The RSSI feature is a feature, such as a code, for describing the RSSI. In some embodiments, the RSSI feature can be represented by a first code subjected to non-uniform quantization and variable length coding on a RSSI of the AP from the client device. The Non-uniform quantization is that for small values with high probability of occurrence, a more precise quantization method is adopted; and for large values with low frequency, a slightly coarse quantization method is adopted. The variable length coding is to make sure that symbols with high frequency have shorter codes. This non-uniform quantization and variable length coding can compress the RSSI to reduce the data size of the RSSI. The RSSI may influence the traffic amount. If the RSSI is low, the traffic amount may be also low. Thus, considering the RSSI condition can facilitate more accurate traffic prediction.

The negotiation rate may refer to an optimal data transmission rate that the AP and the client device automatically negotiate and determine according to the current network environment and mutual capabilities in WLAN communication. This rate is the result of dynamic adjustment to ensure the stability and reliability of data transmission after considering many practical factors. The negotiation rate feature is a feature, such as a code, for describing the negotiation rate. In some embodiments, the negotiation rate feature can be represented by a second code subjected to non-uniform quantization and variable length coding on a negotiation rate of the AP with the client device. This non-uniform quantization and variable length coding can reduce the data size of the negotiation rate. The negotiation rate may influence the traffic amount. If the negotiation rate is low, the traffic amount may be also low. Thus, considering the negotiation rate condition can facilitate more accurate traffic prediction.

The topology structure type of the WLAN may refer to a connection mode of physical and logical connection between various components (such as wireless APs, wireless client devices, routers, etc.) in a wireless network. The connection mode determines a path of data transmission and the overall layout of the network. The topology structure type of the WLAN may include point-to-point topology, ring topology, star topology, tree topology, mesh topology, hybrid topology and so on, and may also include how many APs and how many client devices are in the WLAN. Different topology structures of the WLAN may influence the amount of the traffic transmitted between various components including the AP and the client device. Thus, considering the topology structure type of the WLAN can facilitate more accurate traffic prediction.

The network application type of the WLAN may refer to usage scenarios and requirements in the WLAN. The network application type of the WLAN may include home application type, office application type, public area application type, education application type, medical application type, industrial application type and so on. Different network application types may cause different amount of the traffic. For example, in the home application type, daily household use, such as web browsing, social media and e-mail, usually has low traffic demand, but applications such as high-definition video streaming, online games and cloud backup may significantly increase traffic consumption. In the office application type, corporate office software, such as e-mail, document editing and instant messaging, usually has little traffic, but applications such as video conferencing, uploading and downloading large files, and synchronizing cloud services may consume more traffic. In the public area application type, users' behaviors on public Wi-Fi are diverse, ranging from small-scale web browsing to a large number of video watching or online games that consume traffic, so the traffic demand spans greatly. In the education application type, online courses, video lectures, remote laboratories and other educational contents often contain a lot of multimedia, with high traffic demand, especially high-definition or interactive content. In the medical application type, applications such as medical image transmission and remote medical consultation need high bandwidth and low latency, so there is a great demand for traffic and extremely high requirements for network stability. In the industrial application type, continuous data collection, monitoring and analysis may generate continuous but relatively low traffic demand, but in some scenarios, such as the synchronous update of largescale Internet of Things equipment, there may be short-term high traffic demand. Different network application types may render different amounts of the traffic. Thus, considering the network application type of the WLAN can facilitate more accurate traffic prediction.

The network load of the WLAN may refer to a total amount of data transmitted in the network. A larger network load may result in higher traffic of the AP. Thus, considering the network load of the WLAN can facilitate more accurate traffic prediction.

The traffic usage behavior of a client device of the WLAN may refer to a behavior of a user of the client device, including web browsing, playing a video game, and watching a video, and so on. The web browsing may cause a little traffic, while playing a video game and watching a video may cause a large traffic. Different traffic usage behaviors may render different amounts of the traffic. Thus, considering the traffic usage behavior of a client device of the WLAN can facilitate more accurate traffic prediction.

In some embodiments, the given time may be a time point or a time period. That is, traffic under a communication condition at a time point or in a time period may be predicted.

The above communication condition data are examples for describing the communication condition in which the client device is, but these are not limitations. Other features can be used herein.

At step S220, a traffic probability pattern of the client device at the given time can be predicted by using the communication condition data, time information related to the given time and a prediction model.

The traffic probability pattern may be any pattern of one or more probabilities of traffic. In some embodiments, the traffic probability pattern may include a probability distribution of traffic amounts of the client device, or a probability of occurrence of burst traffic of the client device, or else. The probability distribution of traffic amounts of the client device may be selected from a group of multiple pre-defined probability distributions, such as normal distribution or Gaussian distribution, Poisson distribution, Bernoulli distribution, Binomial distribution, Exponential distribution and so on. The pre-defined probability distributions may be determined during a training process for training the prediction model by processing training traffic data. Details for the training process will be described later.

Thus, by using communication condition data, the given time and a prediction model, a traffic probability pattern of the client device at the given time can be predicted. Since the communication condition data may influence the traffic amount, it is possible to make more accurate traffic prediction by using the communication condition data. In a case that the traffic probability pattern includes a probability distribution of traffic amounts of the client device, the method 200 further includes controlling the client device or the AP according to the predicted probability distribution.

In some embodiments, the controlling further includes determining a predicted traffic amount of the client device at the given time based on the predicted probability distribution of the traffic amounts of the client device at the given time; and performing one or more of the following actions. The predicted traffic amount may include any information inferred from the predicted probability distribution, such as an average value or a maximum value of the traffic under a certain confidence level.

In some embodiments, the actions may include one or more of: switching a connection between the client device and the AP to a connection between the client device and another AP in response to that the predicted traffic amount is lower than a first threshold; maintaining the connection between the client device and the AP in response to that the predicted traffic amount is higher than a second threshold; reducing power or bandwidth of the AP in response to that the predicted traffic amount is lower than a third threshold; or increasing the power or bandwidth of the AP in response to that the predicted traffic amount is higher than a fourth threshold. The second threshold may be the same as or different from the first threshold. The fourth threshold may be the same as or different from the third threshold. The actions are merely examples, but are not limited, and other actions can be performed based on the predicted traffic amount.

If the traffic of the client device is low (that is, for example, the user is reading text books on the client device or the user is not actually using the client device), switching a connection between the client device and the AP to a connection between the client device and another AP during roaming may not cause significant feelings of the user about the disconnection and the reconnection of the client device to the WLAN, so the switching may be performed. In view of the above considerations, it is better to switch the connection when the predicted traffic amount is low, and maintain the connection between the AP and the client device without switching is better when the predicted traffic amount is high. Thus, according to the embodiments, a smooth roaming can be guaranteed without interrupting the user's usage experience of the WLAN.

Further, if the traffic is low, the AP does not need a high power or a high bandwidth for performing the data communication, so it is better to reduce the power or bandwidth of the AP so that the power consumption of the AP can be saved. In another aspect, if the traffic is high, the AP needs a high power or a high bandwidth for guarantee a good data communication, so it is better to increase the power or bandwidth of the AP so that the user can enjoy a good experience when using the WLAN.

According to the embodiments of the disclosure, the actions can be performed based on the predicted traffic probability patterns to guarantee a smooth roaming, or save power consumption, or provide good experience for the user.

In a case that the traffic probability pattern includes a probability of occurrence of burst traffic of the client device, the method 200 further includes controlling the AP according to the predicted probability of the burst traffic.

In some embodiments, it is determined that actual traffic at the given time is abnormal in response to that an actual probability of occurrence of burst traffic at the given time is larger than the predicted probability of burst traffic at the given time. For example, the predicted probability of occurrence of burst traffic under this communication condition at a time point may be 2%, but the actual probability of occurrence of the burst traffic under this communication condition at the time point may be 10%, and it may be determined that the actual probability of occurrence of burst traffic at the time point is larger than the predicted probability of burst traffic at the time point. This means that the actual burst traffic may be much more that the predicted ones, which seems to be an abnormal situation. In some embodiments, in a case that the given time is a time period, the actual probability of occurrence of burst traffic in the time period may be determined by a ratio of a number of time points at which at least one burst traffic actually occurs within the time period to a total number of time points within the time period.

In at least one embodiment, the method further includes performing one or more of the following actions: checking network security of the AP, repairing network security of the AP, starting a network firewall of the AP, restarting the AP, increasing power or bandwidth of the AP, or else.

These actions can handle the case in which more burst traffic occur than predicted, so as to identify the reason for the more burst traffic, and take corresponding actions to carry such more burst traffic to provide good experience for the user.

The prediction model may be a machine learning model. The prediction model may be trained based on training communication condition data of a training client device at training time points or in training time periods together with the time data as independent variables, and training traffic probability patterns of the client device as dependent variables. The training communication condition data is communication condition data collected for training.

To be noted that if the prediction model is trained based on training communication condition data at training time points, the given time input into the prediction model could also be a time point, while if the prediction model is trained based on training communication condition data in training time periods, the given time input into the prediction model could also be a time period.

The training process for training the prediction model may be performed in the AP, or in other devices outside of the AP.

In some embodiments, the traffic probability pattern of the client device may be predicted by a first prediction model to predict a probability distribution of traffic amounts of the client device.

In particular, in the first prediction model, the predicted probability distribution of the traffic amounts may be one of multiple pre-defined probability distributions.

In order to train the first prediction model, training communication condition data of a training client device at training time points or in training time periods may be obtained, and training probability distributions of traffic amounts of the training client device may be obtained based on training traffic data of the training client device at the training time points or in the training time periods. The first prediction model may be trained based on the training probability distributions together with the training communication condition data and time data related to the training time points or the training time periods.

The training communication condition data are described above, and will not be described again.

In some embodiments, in order to obtain training probability distributions of traffic amounts of the training client device at the training time points or in the training time periods based on training traffic data of the training client device at the training time points or in the training time periods, the training traffic data is processed by removing the burst traffic data from the training traffic data, and/or processing the training traffic data by smooth-filtering the training traffic data. The burst traffic data normally means traffic data with a large traffic variation larger than a variation threshold within a short time shorter than a time threshold. The training probability distributions of traffic amounts can be obtained based on the processed training traffic data.

In this embodiment, the smooth-filtering may be performed by using smooth-filtering algorithms. The smooth-filtering algorithms may include Hampel filtering algorithm, Kalman filtering algorithm, moving average algorithm, or other burst value filtering algorithms to filter out the significant, burst traffic values and smooth the original training traffic data. The smooth-filtering can remove burst traffic data in order to remove influence of unusual traffic data, so that the training can facilitate a more accurate prediction model.

To be noted that the processed training traffic data may be used to obtain the training probability distributions of traffic amounts of the training client device, but the original and unprocessed training traffic data may be used to obtain the training probability distributions of traffic amounts of the training client device too, especially in a case that the unprocessed training traffic data is smooth traffic data without burst traffic.

In some embodiments, in order to obtain the training probability distributions of traffic amounts of the training client device at the training time points based on training traffic data of the training client device at the training time points, several manners may be used. In a manner, one or more training time intervals each comprising successive training time points among the training time points are determined based on characteristics of the training communication condition data and/or the training traffic data of the training time points. A training probability distribution of traffic amounts for training time points in each of the one or more training time intervals is determined based on training traffic data in the corresponding training time interval. The training probability distribution is a predefined probability distribution.

Fig. 3A shows a diagram of an example of a training traffic distribution according to at least one embodiment of the present disclosure.

As shown in Fig. 3A, a training probability distribution of traffic amounts in a training time interval of AM 8:23-AM 9:05 is shown. The training time interval may include successive training time points, such as AM 8:23, AM 8:24, ... AM 9:03, AM 9:04, and AM 9:05. The training communication condition data in the corresponding training time interval of AM 8:23-AM 9:05 may include an RSSI of -60dBM (or presented by a coded code), a negotiation rate of 500Mbps (or presented by a coded code), a topology structure type of star topology, a network application type of home application type, network load of 5 client devices connected with the AP, a traffic usage behavior of a user of the client device usually watching videos on a video platform in the morning, and so on.

The traffic amounts at the successive training time points may be obtained from the training traffic data. If the training traffic data are analog, training traffic data may be firstly discretized to obtain the traffic amounts at the successive training time points. For example, a traffic amount of 100M at AM 8:23, a traffic amount of 120M at AM 8:24,..., a traffic amount of 100M at AM 9:03, a traffic amount of 120M at AM 9:04, and a traffic amount of 120M at AM 9:05 are obtained. From all the traffic amounts, some traffic amounts may occur several times, and some may occur a few times. Thus, a probability of each traffic amount can be calculated. It may be calculated that a probability of the traffic amount of 100M is 11%, a probability of the traffic amount of 120M is 12%, ...a probability of the traffic amount of 290M is 2%, a probability of the traffic amount of 250M is 3%, and a probability of the traffic amount of 230M is 6%. To be noted that Fig. 3A only shows several traffic-probability points of (traffic amount, probability) for exemplifying. Other probabilities are not shown.

From these traffic-probability points, fitting or other methods can be utilized to determine a training probability distribution from the traffic-probability points. A training probability distribution of traffic amounts may be determined as a Poisson distribution or nearly a Poisson distribution as shown in Fig. 3A. The Poisson distribution is a predefined probability distribution.

There are many implementations for realizing the determining of the training probability distribution. The determining may be realized by a machine learning model or non-machine learning fitting model. And the non-machine learning fitting model may perform, for example, one or more of linear regression fitting, quadratic regression fitting, and random sampling consistency (RANSAC) fitting.

In some embodiments, in obtaining the training probability distributions of traffic amounts of the training client device in the training time periods (not at training time points) based on training traffic data of the training client device in the training time periods, for example, a time period is from AM 8:23-AM 9:05, and by analyzing the traffic amounts in the time period, traffic-probability points of (traffic amount, probability) may be obtained, and a training probability distribution, such as a Poisson distribution, in the time period may be determined based on the traffic-probability points. The process is like the above example shown in Fig. 3A, and details are omitted herein.

Using the training traffic probability patterns of the traffic data, instead of large amounts of the traffic data, can reduce the data amount and complexity for training the prediction model.

The first prediction model may be formed by deep machine learning algorithms including algorithms, such as Support Vector Machine (SVM) algorithm, Back Propagation (BP) algorithm, Extreme Learning Machine (ELM) algorithm and so on. An ensemble learning algorithm may also be used, by taking SVM, BP and ELM cascaded together as an example. Other learning algorithms may cascade various machine learning algorithms, which are not described herein for simplicity.

After the training probability distributions are obtained for training the first prediction model, together with the time data and the training communication condition data for training the first prediction model, the first prediction model can be obtained. In such way, the trained first prediction model can provide more accurate and efficient traffic prediction results related to traffic probability distributions.

Furthermore, it is further considered that that burst traffic may render some phenomenon about abnormal traffic, so it is necessary to predict a probability of burst traffic.

In some embodiments, a second prediction model regarding burst traffic may be used to predict a probability of occurrence of burst traffic of the client device and will be explained below.

In some embodiments, the second prediction model may be trained by steps of: determining occurrences of burst traffic based on training traffic data of the training client device at training time points or in training time periods; obtaining training communication condition data of a training client device at the training time points or in the training time periods; obtaining training probabilities indicating occurrences of burst traffic of the training client device at the training time points or in the training time periods; and training the second prediction model based on the training probabilities together with the training communication condition data and time data related to the training time points or the training time periods.

The training communication condition data are described above, and will not be described again. The training communication condition data may be the same as the those used in training the first prediction model, or different from those.

In order to obtain training probabilities indicating occurrences of burst traffic of the training client device at the training time points or in the training time periods, the training traffic data may be processed by extracting burst traffic from the training traffic data; and the training probabilities indicating occurrences of burst traffic may be obtained based on the processed training traffic data.

In some embodiments, the extracting burst traffic may be performed by obtaining traffic data with a larger traffic variation (larger than a variation threshold) in a short time (shorter than a time threshold), or obtaining the burst traffic during a process of smooth-filtering the traffic data.

In this embodiment, the smooth-filtering algorithm may include Hampel filtering algorithm, Kalman filtering algorithm, moving average algorithm, or other abnormal value filtering algorithm to smooth out (or filter out) the significant, burst traffic values. In some smooth-filtering algorithms, the burst traffic values may be identified during the smooth-filtering for smoothing the traffic.

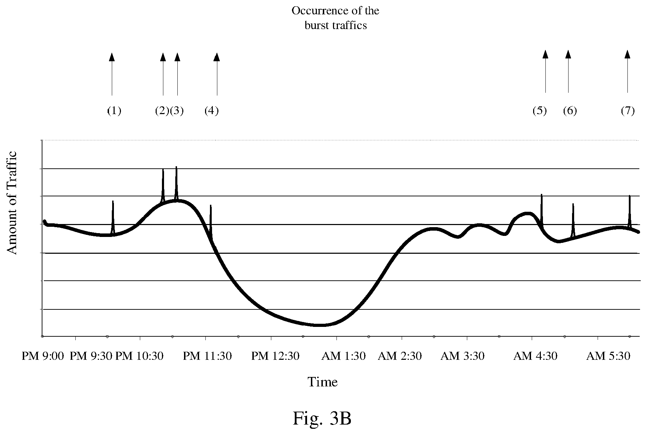

Fig. 3B shows an example of occurrences of the training burst traffic during a period of time according to at least one embodiment of the disclosure.

As shown in Fig. 3B, a traffic diagram over time is shown with several burst traffic. For example, seven occurrences of training burst traffic ((1)-(7)) at seven training time points are collected. For each occurrence of the burst traffic ((1)-(7)), and the communication condition data at the seven training time points may be also collected. For example, the burst traffic (1) is at PM 10:01 with the communication condition data including, for example, an RSSI of -70dBM, a negotiation rate of 1300Mbps, a topology structure type of star topology, a network application type of home application type, network load of 4 client devices connected with the AP, a traffic usage behavior of a user of the client device usually playing video games at night, and so on. The burst traffic (2) and (3) are at PM 10:50 and PM 11:10 with the communication condition data including, for example, an RSSI of -60dBM, a negotiation rate of 1300Mbps, a topology structure type of star topology, a network application type of home application type, network load of three client devices connected with the AP, a traffic usage behavior of a user of the client device usually playing video games at night, and so on. During PM 12:30-AM 4:30, no burst traffic occurs, and no burst traffic data are collected as training traffic data. Other burst traffic (4)-(7) may be collected together with the communication condition data at training time points, respectively.

The training probability indicating an occurrence of burst traffic at the training time points may be calculated by taking 100% probability for an occurrence of the burst traffic or taking 0% probability for no occurrence of the burst traffic.

The above description describes determining occurrences of burst traffic based on training traffic data of the training client device at training time points, and obtaining training probabilities indicating occurrences of burst traffic of the training client device at the training time points.

Descriptions about determining occurrences of burst traffic based on training traffic data of the training client device in the training time periods, and obtaining training probabilities indicating occurrences of burst traffic of the training client device in the training time periods will be explained below.

The training probabilities indicating occurrences of burst traffic in the training time periods may be calculated by following steps. For a training probability in a training time period, a number of occurrences of burst traffic at some time points in the training time period can be counted, and the counted number may be divided by a total number of time points in the training time period, to obtain the training probability.

For example, a training time period is from PM 10:30 - PM 11:30, the number of occurrences of burst traffic at some time points from PM 10:30 - PM 11:30 is 15 (for example, burst traffic occurs at PM 10:31, PM 10:33, PM 10:38, PM 10:41, PM 10:51, PM 10:52, PM 10:53, PM 10:58, PM 10:59, PM 11:20, PM 11:21, PM 11:25, PM 11:26, PM 11:27, PM 11:28, respectively), while the total number of time points from PM 10:30 - PM 11:30 is 60, and thus the training probability indicating occurrence of burst traffic in the training time period may be calculated as 15/60=25%.

After obtaining the training probabilities, the second prediction model can be trained based on the training probabilities together with the training communication condition data and time data related to the training time points or the training time periods. Herein, the time data related to the training time points may be the time points, such as, the seven time points as show in Fig. 3B. Or in the above example, the time data related to the training time periods may be time periods, such as, from PM 10:30 - PM 11:30 and other time periods.

The second prediction model can be trained so that the communication condition data at a given time and the time information related to the given time can be input into the second prediction model, and the output of the second prediction model can be a probability of occurrence of burst traffic under such communication condition and such time information. For example, the communication condition data indicate an RSSI of -60dBM, a negotiation rate of 1300Mbps, a topology structure type of star topology, a network application type of home application type, network load of 3 client devices connected with the AP, a traffic usage behavior of a user of the client device usually playing video games at night, and so on, and the time information related to a given time may be a time point of PM 10:30, and the output of the second prediction model may indicate 2% probability of occurrence of burst traffic at PM 10:30. In another example, the time information related to a given time may be a time period from PM 10:30 - PM 11:30, and the output of the second prediction model may indicate 3% probability of occurrence of burst traffic in the time period from PM 10:30 - PM 11:30.

Thus, according to at least one embodiment of the present disclosure, by considering multi-dimensional factors affecting traffic data change are considered as communication condition data, more accurate prediction models can be trained to more accurately predict traffic of a client device, so as to more reasonably adjust network bandwidth and traffic distribution, ensure the stability of roaming network and/or improve user experience. And, some embodiments of the present disclosure can train more accurate prediction models. Further, some embodiments of the present disclosure may reduce computation complexity for training the prediction model.

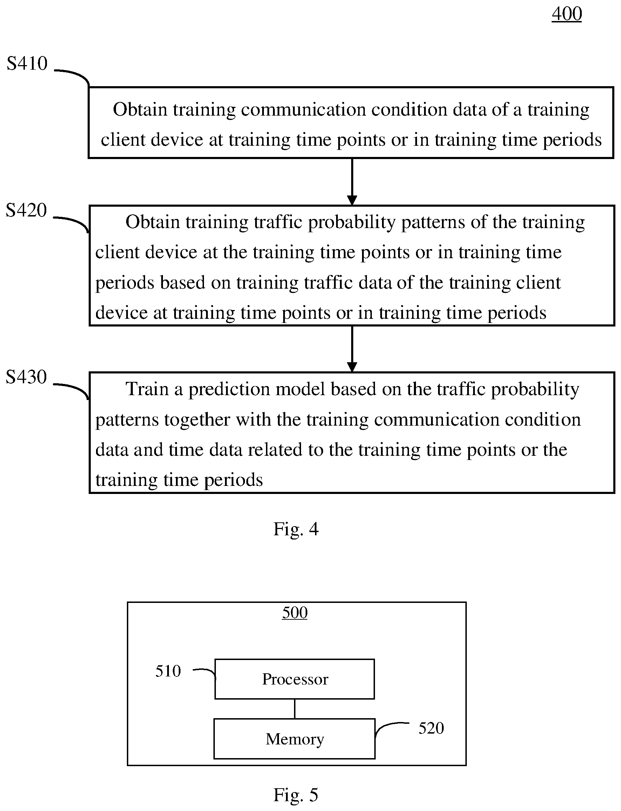

Fig. 4 shows a flowchart of a model training method 400 based on traffic prediction for an AP connected with a client device according to at least one embodiment of the present disclosure.

As shown in Fig. 4, the training method 400 includes steps S410, S420 and S430.

At step S410, training communication condition data of a training client device at training time points or in training time periods may be obtained.

In some embodiments, the training communication condition data may include a RSSI feature of the AP from the client device, a negotiation rate feature of the AP with the client device, a topology structure type of the WLAN where the AP and the client device are located, a network application type of the WLAN where the AP and the client device are located, a network load of the WLAN where the AP and the client device are located, a traffic usage behavior of the client device, or else. Thus, by comprehensively considering more training communication condition data regarding the communication condition in which the client device is, it is possible to use such training communication condition data to train a more accurate prediction model.

In some embodiments, in order to reduce the data size of the training communication condition data, the RSSI feature may be represented by a first code subjected to non-uniform quantization and variable length coding on a RSSI of the AP from the client device, and/or the negotiation rate feature may be represented by a second code subjected to non-uniform quantization and variable length coding on a negotiation rate of the AP with the client device.

At step S420, training traffic probability patterns of the training client device may be obtained based on training traffic data of the training client device at the training time points or in the training time periods.

At step S430, a prediction model may be trained based on the traffic probability patterns together with the training communication condition data and time data related to the training time points or the training time periods.

The training traffic probability patterns may be selected from a group of multiple pre-defined probability distributions, such as normal distribution or Gaussian distribution, Poisson distribution, Bernoulli distribution, Binomial distribution, Exponential distribution and so on.

In some embodiments, the training traffic probability patterns may include training probability distributions of traffic amounts of the training client device.

In some embodiments, the step S430 may include: obtaining the training probability distributions of traffic amounts of the training client device at the training time points or in the training time periods based on training traffic data of the training client device at the training time points or in the training time periods.

In some embodiments, the step S430 may include: training the prediction model based on the training probability distributions together with the training communication condition data and time data related to the training time points or the training time periods.

In some embodiments, the step S420 may include: processing the training traffic data by removing the burst traffic data from the training traffic data, and/or processing the training traffic data by smooth-filtering the training traffic data; and obtaining training probability distributions of traffic amounts based on the processed training traffic data.

In some embodiments, the step S420 may include: determining one or more training time intervals each comprising successive training time points among the training time points based on characteristics of the training communication condition data and/or the training traffic data of the training time points; and determining a training probability distribution of traffic amounts for training time points in each of the one or more training time intervals based on training traffic data in the corresponding training time interval, wherein the training probability distribution is a predefined probability distribution.

In some embodiments, the training traffic probability patterns may include training probabilities of occurrences of burst traffic of the training client device.

In some embodiments, the step S420 may include: obtaining training probabilities indicating occurrences of burst traffic of the training client device at the training time points or in the training time periods based on training traffic data of the training client device at the training time points or in the training time periods.

In some embodiments, the step S430 may include: training the prediction model based on the training probabilities together with the training communication condition data and time data related to the training time points or the training time periods.

In some embodiments, the step S420 may include: processing the training traffic data by extracting burst traffic from the training traffic data; and obtaining the training probabilities indicating occurrences of burst traffic based on the processed training traffic data.

In some embodiments, burst traffic from the training traffic data may be extracted by obtaining traffic data with a larger traffic variation (larger than a threshold) in a short time (shorter than a time threshold), or obtaining the burst traffic during a process of smooth-filtering the traffic data.

In this embodiment, the smooth-filtering algorithm may include Hampel filtering algorithm, Kalman filtering algorithm, moving average algorithm, or other abnormal value filtering algorithm to smooth out (or filter out) the significant, burst traffic values. In some filtering algorithms, the burst traffic values may be identified during the smooth-filtering.

To be noted that since the smooth-filtering can obtain the smoothed traffic and obtain the burst traffic at the same time, in some embodiments, the same training traffic data can be subject to the smooth-filtering to train the first prediction model and the second prediction model at the same time, so as to improve the training efficiency.

Other details for model training are described above, and will not omitted herein.

Thus, according to the embodiments of the present application, by considering multi-dimensional factors affecting traffic data change as communication condition data, including an RSSI, negotiation rate, network topology, business application, network load, user behavior and so on, more accurate prediction models can be trained. Using the training traffic probability patterns of the traffic data, instead of large amounts of the traffic data, can reduce the data amount and complexity for training the prediction model. Some communication condition data can also be compressed in order to further reduce the data amount and complexity for training the prediction model. Further, traffic (with or without burst traffic) can be processed for training the first prediction model to predict probability distributions of traffic, and the burst traffic can be processed for training the second prediction model to predict probability of burst traffic.

Fig. 5 shows an exemplary block diagram illustrating a control apparatus 500 according to at least one embodiment of the present disclosure. It should be noted that the control apparatus 500 depicted in Fig. 5 may be located in an AP or outside of the AP, and can be used to perform the method 200 as described above according to at least one embodiment of the disclosure.

As shown in FIG. 5, the control apparatus 500 may include one or more processors 510 and a memory 520. The memory 510 is coupled to one or more of the processors 510.

Examples of the one or more processors 510 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality of the control method described throughout this disclosure.

The one or more processors 510 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software, such as a set of computer program instructions, may be stored in the memory 520, and when executed by one or more of the processors 510, perform operations of the method according to at least one embodiment of the disclosure.

The memory 520 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 520 may reside in the one or more processors 510, external to the one or more processors 510, or distributed across multiple entities including the one or more processors 510. The memory 520 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

The program instructions, when performed by the one or more processors 510, performs a control method for an AP connected with a client device, including: obtaining communication condition data of the client device at a given time; and predicting a traffic probability pattern of the client device at the given time by using the communication condition data, time information related to the given time and a prediction model.

Other details for the control method can be found in the above description, and will be omitted herein.

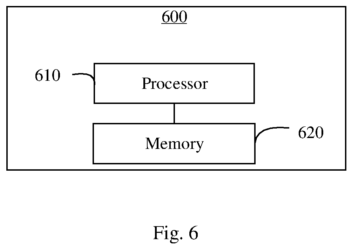

Fig. 6 shows an exemplary block diagram illustrating a model training apparatus 600 according to at least one embodiment of the present disclosure. It should be noted that the training apparatus 600 depicted in Fig. 6 may be located in an AP or outside of the AP, and can be used to perform the model training method as described above according to at least one embodiment of the disclosure.

The training apparatus 600 includes one or more processors 610; and one or more memories 620, in which program instructions are stored. The program instructions, when performed by the one or more processors, perform a model training method for an AP connected with a client device, including obtaining training communication condition data of a training client device at training time points or in training time periods; obtaining training traffic probability patterns of the training client device at the training time points or in the training time periods based on training traffic data of the training client device at the training time points or in the training time periods; and training a prediction model based on the traffic probability patterns together with the training communication condition data and time data related to the training time points or the training time periods.

Other details for the model training method can be found in the above description, and will be omitted herein.

It is also disclosed a computer program product according to at least one embodiment of the present disclosure. As an example, the computer program product comprises a non-transitory computer readable storage medium having program instructions embodied therewith, and the program instructions are executable by a processor of an apparatus in or outside an AP in a WLAN. When executed, the program instructions cause the processor to perform one or more of the described operations of methods above, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Expression such as "according to", "based on", "dependent on", and so on as used in the disclosure does not mean "according only to", "based only on", or "dependent only on", unless it is explicitly otherwise stated. In other words, such expression generally means "according at least to", "based at least on", or "dependent at least on" in the disclosure.

Any reference in the disclosure to an element using the designation "first", "second" and so forth is not intended to comprehensively limit the number or order of such elements. These expressions can be used in the disclosure as a convenient method for distinguishing two or more units. Thus, a reference to a first unit and a second unit does not imply that only two units can be employed or that the first unit must precede the second unit in some form.

The term "determining" used in the disclosure can include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth can also be regarded as "determining". That is, regarding "determining", several actions can be regarded as "determining".

The terms such as "connected", "coupled" or any of their variants used in the disclosure refer to any connection or combination, direct or indirect, between two or more units, which can include the following situations: between two units that are "connected" or "coupled" with each other, there are one or more intermediate units. The coupling or connection between the units can be physical or logical, or can also be a combination of the two. As used in the disclosure, two units can be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

The present disclosure has been described in detail above, but it is obvious to those skilled in the art that the present disclosure is not limited to the embodiments described in the disclosure. The present disclosure can be implemented as a modified and changed form without departing from the spirit and scope of the present disclosure defined by the description of the claims. Therefore, the description in the disclosure is for illustration and does not have any limiting meaning to the present disclosure.

## Claims

1. A control method for an access point (AP) connected with a client device, comprising:
obtaining communication condition data of the client device at a given time; and
predicting a traffic probability pattern of the client device at the given time by using the communication condition data, time information related to the given time and a prediction model.

2. The method according to claim 1, wherein the communication condition data comprise one or more of the followings:
a Received Signal Strength Indication (RSSI) feature of the AP from the client device,
a negotiation rate feature of the AP with the client device,
a topology structure type of the wireless local area network (WLAN) where the AP and the client device are located,
a network application type of the WLAN where the AP and the client device are located,
a network load of the WLAN where the AP and the client device are located, or
a traffic usage behavior of the client device,
wherein preferably, the RSSI feature is represented by a first code subjected to non-uniform quantization and variable length coding on a RSSI of the AP from the client device, and/or
the negotiation rate feature is represented by a second code subjected to non-uniform quantization and variable length coding on a negotiation rate of the AP with the client device.

3. The method according to claim 1, wherein the traffic probability pattern of the client device includes a probability distribution of traffic amounts of the client device, and preferably, the predicted probability distribution of the traffic amounts is one of multiple predefined probability distributions.

4. The method of claim 3, further comprising:
determining a predicted traffic amount of the client device at the given time based on the predicted probability distribution of the traffic amounts of the client device at the given time; and
performing one or more of the following actions:
switching a connection between the client device and the AP to a connection between the client device and another AP in response to the predicted traffic amount being lower than a first threshold;
maintaining the connection between the client device and the AP in response to the predicted traffic amount being higher than a second threshold;
reducing power or bandwidth of the AP in response to the predicted traffic amount being lower than a third threshold; or
increasing the power or bandwidth of the AP in response to the predicted traffic amount being higher than a fourth threshold.

5. The method according to claim 3, wherein the prediction model is trained by steps of:
obtaining training communication condition data of a training client device at training time points or in training time periods;
obtaining training probability distributions of traffic amounts of the training client device at the training time points or in the training time periods based on training traffic data of the training client device at the training time points or in the training time periods; and
training the prediction model based on the training probability distributions together with the training communication condition data and time data related to the training time points or the training time periods,
wherein preferably, the obtaining training probability distributions of traffic amounts of the training client device at the training time points or in the training time periods based on training traffic data of the training client device at the training time points or in the training time periods comprises:
processing the training traffic data by removing the burst traffic data from the training traffic data, and/or processing the training traffic data by smooth-filtering the training traffic data; and
obtaining training probability distributions of traffic amounts based on the processed training traffic data.

6. The method according to claim 5, wherein, the obtaining training probability distributions of traffic amounts of the training client device at the training time points based on training traffic data of the training client device at the training time points comprises:
determining one or more training time intervals each comprising successive training time points among the training time points based on characteristics of the training communication condition data and/or the training traffic data of the training time points; and
determining a training probability distribution of traffic amounts for training time points in each of the one or more training time intervals based on training traffic data in the corresponding training time interval, wherein the training probability distribution is a predefined probability distribution.

7. The method of claim 1, wherein,
the traffic probability pattern of the client device includes a probability of occurrence of burst traffic of the client device, wherein preferably, the method further comprises:
determining actual traffic at the given time is abnormal in response to that an actual probability of occurrence of burst traffic at the given time is larger than the predicted probability of burst traffic at the given time.

8. The method according to claim 7, further comprising performing one or more of the following actions:
checking network security of the AP;
repairing network security of the AP;
starting a network firewall of the AP;
restarting the AP; or
increasing power or bandwidth of the AP.

9. The method according to claim 7, wherein the prediction model is trained by steps of:
determining occurrences of burst traffic based on training traffic data of the training client device at training time points or in training time periods;
obtaining training communication condition data of a training client device at the training time points or in the training time periods;
obtaining training probabilities indicating occurrences of burst traffic of the training client device at the training time points or in the training time periods based on training traffic data of the training client device at the training time points or in the training time periods; and
training the prediction model based on the training probabilities together with the training communication condition data and time data,
wherein preferably, the obtaining training probabilities indicating occurrences of burst traffic of the training client device at the training time points or in the training time periods based on training traffic data of the training client device at the training time points or in the training time periods comprises:
processing the training traffic data by extracting burst traffic from the training traffic data; and
obtaining the training probabilities indicating occurrences of burst traffic based on the processed training traffic data.

10. A model training method for an access point (AP) connected with a client device, comprising
obtaining training communication condition data of a training client device at training time points or in training time periods;
obtaining training traffic probability patterns of the training client device at the training time points or in the training time periods based on training traffic data of the training client device at the training time points or in the training time periods; and
training a prediction model based on the traffic probability patterns together with the training communication condition data and time data related to the training time points or the training time periods.

11. The method according to claim 10, wherein the training traffic probability patterns include training probability distributions of traffic amounts of the training client device,
wherein the program instructions, when performed by the one or more processors, perform the obtaining training traffic probability patterns of the training client device at the training time points or in the training time periods based on training traffic data of the training client device at the training time points or in the training time periods by:
obtaining the training probability distributions of traffic amounts of the training client device at the training time points or in the training time periods based on training traffic data of the training client device at the training time points or in the training time periods; and
wherein the program instructions, when performed by the one or more processors, perform the training a prediction model based on the traffic probability patterns together with the training communication condition data and time data related to the training time points or the training time periods by:
training the prediction model based on the training probability distributions together with the training communication condition data and time data related to the training time points or the training time periods.

12. The method according to claim 11, wherein the obtaining training probability distributions of traffic amounts of the training client device at the training time points or in the training time periods based on training traffic data of the training client device at the training time points or in the training time periods comprises:
processing the training traffic data by removing the burst traffic data from the training traffic data, and/or processing the training traffic data by smooth-filtering the training traffic data; and
obtaining training probability distributions of traffic amounts based on the processed training traffic data.

13. The method according to claim 11, wherein, the obtaining training probability distributions of traffic amounts of the training client device at the training time points based on training traffic data of the training client device at the training time points comprises:
determining one or more training time intervals each comprising successive training time points among the training time points based on characteristics of the training communication condition data and/or the training traffic data of the training time points; and
determining a training probability distribution of traffic amounts for training time points in each of the one or more training time intervals based on training traffic data in the corresponding training time interval, wherein the training probability distribution is a predefined probability distribution.

14. The method according to claim 10, wherein the training traffic probability patterns include training probabilities of occurrences of burst traffic of the training client device,
wherein the obtaining training traffic probability patterns of the training client device at the training time points or in the training time periods based on training traffic data of the training client device at the training time points or in the training time periods comprises:
obtaining training probabilities indicating occurrences of burst traffic of the training client device at the training time points or in the training time periods based on training traffic data of the training client device at the training time points or in the training time periods; and
wherein the training a prediction model based on the traffic probability patterns together with the training communication condition data and time data related to the training time points or the training time periods comprises:
training the prediction model based on the training probabilities together with the training communication condition data and time data related to the training time points or the training time periods.

15. A control apparatus, comprising:
one or more processors; and
one or more memories, in which program instructions are stored,
wherein the program instructions, when performed by the one or more processors, perform a control method for an access point (AP) connected with a client device, comprising:
obtaining communication condition data of the client device at a given time; and
predicting a traffic probability pattern of the client device at the given time by using the communication condition data, time information related to the given time and a prediction model.
